# EUROPÄISCHE PATENTSCHRIFT

(11) **EP 1 373 827 B1**
(45) Veröffentlichungstag und Bekanntmachung des Hinweises auf die Patenterteilung: **14.10.2009**
(21) Anmeldenummer: 02745207.7
(22) Anmeldetag: 02.04.2002
(51) Int. Cl.: G01B 11/24, G01B 11/30

(54) **Messgerät**
Measuring device
Appareil de mesure

(30) Priorität: 03.04.2001 DE 10116588; 30.05.2001 DE 10126507
(43) Veröffentlichungstag der Anmeldung: 02.01.2004
(73) Patentinhaber: Werth Messtechnik GmbH, 35394 Giessen (DE)
(72) Erfinder: CHRISTOPH, Ralf, 35641 Schöffengrund (DE)
(74) Vertreter: Stoffregen, Hans-Herbert
(86) Internationale Anmeldenummer: PCT/EP2002/003633
(87) Internationale Veröffentlichungsnummer: WO 2002/082011

(56) Entgegenhaltungen:
- DE-A- 4 016 264
- DE-A- 19 904 899
- GB-A- 2 126 745
- US-A- 5 039 868
- US-A- 5 369 492

## Beschreibung

Die Erfindung bezieht sich auf umfassend eine Beleuchtungsanordnung zum Beleuchten eines zu messenden Objektes mit mehreren von einer Halterung ausgehenden Lichtquellen sowie eine Optik, über die das Objekt messbar bzw. abbildbar ist, wobei die Lichtquellen in der Halterung derart angeordnet sind, dass deren Einfallswinkel die optische Achse der Optik in voneinander abweichenden Bereichen schneiden. Auch nimmt die Erfindung Bezug auf ein Verfahren zum Beleuchten eines Objekts mit mehreren Lichtquellen mit voneinander abweichenden Einfallswinkeln zu einer optischen Achse einer Optik eines Messgerätes, mit der das Objekt gemessen bzw. abgebildet wird.

Beim Einsatz von optischen und Multisensor-Koordinatenmessgeräten sowie Messmikrostonpen ist es notwendig, die zu messenden Objekte mittels geeigneter Beleuchtungsanordnungen auszuleuchten. Übliche Beleuchtungsarten sind dabei Durchlicht, Hellfeld-Auflicht und Dunkelfeld-Auflicht. Durch die Wahl zwischen den verschiedenen Beleuchtungsmöglichkeiten wird abhängig von der Gestalt des zu messenden Objektes eine optimale Ausleuchtung gewährleistst. So trägt bei der Dunkelfeldbeleuchtung nur im Objekt abgebeugtes Licht zur Abbildung bei, wodurch vereinzelte Strukturen hell auf dunklem Grund erscheinen. Bei der Hellfeldbeleuchtung gelangt das zu beleuchtende Licht im Durchlicht oder Auflicht direkt in die Optik. Dabei erscheinen die Objekte, sofern diese selbst kontrastreich sind, dunkel oder farbig auf hellern Untergrund.

Von besonderer Bedeutung ist die Gestaltung des Dunkelfeld-Auflichts. Hierbei kommen Systeme in Form von z. B. Glasfaserringlicht oder ringförmigen Anordnungen von LED's (lichtemittierende Dioden) zum Einsatz. Um den Beleuchtungswinkel bei unveränderter Arbeitsebene verstellen zu können, werden Glasfaserringlichter in mehrere Segmente unterteilt oder zur Erreichung des gleichen Ergebnisses durch segmentweises Zu- oder Wegschalten von LED-Bereichen erzeugt. Hierdurch besteht die Möglichkeit, die zu messenden Objekte unterschiedlichen Beleuchtungen auszusetzen bzw. die Einfallsrichtung der Beleuchtung zu ändern.

Auch sind Vorschläge bekannt, bei denen durch gleichzeitiges Heben und Senken einer Beleuchtungsquelle oder kugelförmiger Anordnung mehrerer Beleuchtungsquellen der Winkel zwischen Oberfläche des zu messenden Objektes und Beleuchtungsstrahl veränderlich gestaltet wird. Nachteilig bei diesen Maßnahmen ist es jedoch, dass durch die notwendige mechanische Verstellung des Beleuchtungssystems Kollisionsprobleme mit dem zu messenden Objekt auftreten können. Außerdem ist eine relativ aufwendige Mechanik notwendig bzw. der gesamte Arbeitsabstand wird ungünstig verringert.

Aus der DE 39 06 555 A1 ist eine Auflicht-Objektbeleuchtungseinrichtung mit wählbarem Lichteinfallswinkel und mehreren einzeln schaltbaren Lichtquellen bekannt. Ohne mechanische Verstellung von Lichtquellen oder Abbildungselementen wird dabei eine Beleuchtung unter verschiedenen, auswählbaren Beleuchtungswinkeln möglich. Hierzu sind die von einer kalottenförmigen Halterung ausgehenden Lichtquellen, die konzentrisch um einen Tubus eines Mikroskops angeordnet werden können, sämtlichst auf eine Objektebene ausgerichtet, so dass der Abbildungsabstand stets gleich zu wählen ist. Eine diesbezügliche Anordnung ist auch für Koordinatenmessgeräte denkbar.

Bei einem programmierbaren Oberflächenbeleuchter für Videoprüfanlagen nach der DE 199 04 899 A1 gehen von einer scheibenförmigen Halterung parallel zueinander ausgerichtete LED's aus, deren Strahlen auf einen Parabol-Spiegel fallen, über den die Strahlung auf das zu messende Objekt unter Einfallswinkeln im Bereich zwischen 45° und 90° fallen kann.

Des Weiteren ist es bekannt, zwischen Lichtquellen wie lichtemittierenden Dioden und einem zu messenden Objekt eine Fresnel-Linse anzuordnen, um ein zu messendes Objekt unter unterschiedlichen Einfallswinkeln zu beleuchten (DE 198 37 797 A1).

Weitere Anordnungen, ein Objekt unter voneinander abweichenden Einfallswinkeln zu beleuchten, die in einer gemeinsamen Arbeitsebene fokussiert werden, sind der US 4,893,223 oder DE 196 53 234 A1 zu entnehmen.

Aus der DE 40 16 264 C2 ist eine faseroptische Mehrpunktleuchte mit einem zylinderförmigen Kopf zur Beleuchtung des Arbeitsfelds eines Mikroskops bekannt.

Um bei einer faseroptischen Mehrpunktleuchte die Beleuchtung auf ein gewünschtes Objektfeld einzustellen, sind nach der DE 32 00 938 A1 Lichtleitfaserbündel beweglich ausgebildet.

Der US-A-5,369,492 ist eine Messeinrichtung zur Prüfung von Lötstellen zu entnehmen. Hierzu sind konzentrisch um eine Optik Leuchtdioden zum Ausleuchten des Messbereichs angeordnet, die diesen unter unterschiedlichen Winkeln ausleuchten.

Aus der GB-A-2,126,745 ist eine Vorrichtung zur Messung der Hornhautoberfläche bekannt Dabei besteht die Möglichkeit, eine die Hornhaut ausleuchtende Beleuchtung senkrecht zur Achse einer Optik zu verstellen, mit der die Hornhaut gemessen wird.

Der vorliegenden Erfindung liegt das Problem zu Grunde, ein Messgerät sowie ein Verfahren zum Beleuchten eines Objektes derart weiterzubilden, dass problemlos ein Einstellen der Beleuchtung auf unterschiedliche Arbeitsebenen möglich ist, um ein zu messendes Objekt bzw. eine Fläche oder Kante des Objekts optimal zu beleuchten. Dabei soll durch die Lichtquellen selbst eine Einschränkung des Messbereichs nicht erfolgen.

Erfindungsgemäß wird das Problem im Wesentlichen durch ein Messgerät der eingangs genannten Art dadurch gelöst, dass die Optik des als Koordinatenmessgerät ausgebildeten Messgerätes eine Zoomoptik mit veränderbarem Arbeitsabstand ist, dass die Einfallswinkel der Lichtquellen derart angeordnet sind, dass Einfallswinkel von Lichtquellen die optische Achse im jeweiligen eingestellten Arbeitsabstandsbereich der Optik schneiden, oder dass die Optik einen konstanten Arbeitsabstand aufweist und das Objekt durch Relativverstellung der Halterung entlang der optischen Achse zu der Optik unter unterschiedlichen Lichteinfallswinkeln beleuchtbar ist. Insbesondere ist vorgesehen, dass die Lichtquellen auf die optische Achse vorzugsweise konzentrisch umgebenden Kreisen angeordnet sind, wobei auf Kreisen unterschiedlicher Durchmesser angeordnete Lichtquellen die optische Achse in Bereichen voneinander abweichender Arbeitsabstände schneiden können.

Die Halterung für die Lichtquellen kann eine Ebene aufspannen, die die optische Achse senkrecht schneidet. Dabei kann die Halterung eine Kreisscheibe bilden oder auch nur aus einem oder mehreren quader- oder balkenförmigen Aufnahmen für die Lichtquellen bestehen.

Auch besteht die Möglichkeit, die Halterung hauben- oder kalottenförmig auszubilden, die ihrerseits die optische Achse konzentrisch umgibt

Um eine hohe Dichte von anzuordnenden Lichtquellen zu ermöglichen, sieht die Erfindung des Weiteren vor, dass die Lichtquellen wie LED's auf aufeinanderfolgenden Kreisen radial versetzt zueinander angeordnet sind.

Die Halterung gewünschter Geometrie sollte Aussparungen wie Bohrungen aufweisen, in denen die Lichtquellen vorzugsweise ortsfest angeordnet sind. Aber es besteht auch die Möglichkeit, die Lichtquellen selbst in den einzelnen Aussparungen zu verstellen wie zu verschwenken.

Insbesondere ist auch vorgesehen, dass die Halterung an sich höhenverstellbar ist, also entlang optischer Achse verstellbar ausgebildet ist. Eine solche Anordnung ist insbesondere für eine Messanordnung mit einer Optik geeignet, die einen konstanten oder im Wesentlichen konstanten Arbeitsabstand besitzt.

Bei einer Halterung kalotten- oder haubenförmiger Geometrie sollte diese in ihrem objektseitigen lichtquelleaufnehmenden Bereich einen Krümmungsradius mit 40 mm ≤ R ≤ 80 mm, insbesondere R in etwa 60 mm aufweisen. Hierdurch können die Lichtquellen derart auf insbesondere konzentrisch zueinander verlaufenden Kreisen angeordnet werden, dass die Strahlen die Arbeitsebene unter einem Winkel 5° bis zu z. B. 85° schneiden, ohne dass die Halterung selbst eine Höhe aufweisen muss, die die Gefahr einer Kollision mit dem zu messenden Objekt hervorruft. Gleichzeitig ist es nicht erforderlich, dass die Halterung zu der Optik bzw. dem diese aufnehmenden Gehäuse verstellt wird.

Erfindungsgemäß kann eine Winkelverstellung zwischen Beleuchtungsstrahl und Oberfläche des Objektes durch unterschiedliche Winkellagen fest angeordneter Lichtquellen erfolgen, wobei diese in einer Ebene angeordnet sind, die sich im kollisionsfreien Raum befinden. In Abhängigkeit von dem wirksamen Arbeitsabstand bzw. auszuleuchtenden Bereich werden die Lichtquellen benutzt, deren Winkelstellungen auf den Arbeitsabstand bzw. Bereich ausgerichtet sind. Umgekehrt wird die Winkelverstellung durch Veränderung des wirksamen Arbeitsabstandes der verwendeten Optik bzw. des optischen Systems erreicht. Selbstverständlich besteht auch die Möglichkeit, dass stets sämtliche oder im Wesentlichen sämtliche Lichtquellen zum Beleuchten des Objektes genutzt werden, wobei stets eine optimale Ausleuchtung des Objektes in der Arbeitsebene erfolgt, da erfindungsgemäß Gruppen von Lichtquellen die optische Achse der Optik in unterschiedlichen Bereichen bzw. Abschnitten schneiden. Somit kann in diesem Fall ohne zusätzliche mechanische Verstellung sowohl mit unterschiedlichem Belenchtungs-einfallswinkel als auch ausreichend langen Arbeitsabständen gearbeitet werden.

Ist die erfindungsgemäße Beleuchtungsanordnung insbesondere für Dunkelfeld-Auflichtverfahren bestimmt, so besteht ohne Weiteres die Möglichkeit, die Anordnung auch für Hellfeld-Auflichtmessungen zu verwenden. Hierzu ist vorgesehen, dass von den Lichtquellen emittierte Strahlungen derart umgelenkt werden, dass diese entlang der optischen Achse auf das Objekt auftreffen. Selbstverständlich kann in gewohnter Weise neben der Abbildungsoptik eine Hellfeld-Auflicht-Anordnung vorgesehen sein.

Sind erwähntermaßen Lichtquellen vorzugsweise LED's, so können auch ausgerichtete Faserbündel und/oder Faserringsegmente zur Realisierung der erfindungsgemäßen Lehre benutzt werden. Als Lichtquellen sind jedoch auch Spiegel geeignet, über die Licht derart umgelenkt werden kann, dass die Einfallswinkel der von den Spiegeln reflektierten Strahlungen die optische Achse der Optik in voneinander abweichenden Bereichen, insbesondere Arbeitsabständen schneiden.

Anstelle einer Zoomoptik mit veränderbarem Arbeitsabstand kann auch eine Optik verwendet werden, die mehrere Kameras in unterschiedlichen Schnittweiten umfasst, denen ein gemeinsames Objektiv mit fester Brennweite zugeordnet ist. Ferner kann die Zoomoptik durch eine Optik ersetzt werden, die vom Objekt voneinander abweichende Arbeitsabstände aufweisen.

Die Zoomoptik mit veränderbarem Arbeitsabstand kann eine Konstruktion aufweisen, wie diese der WO 99/53268 zu entnehmen ist, auf deren Offenbarung ausdrücklich verwiesen wird.

Auch können die Lichtquellen mit voneinander abweichenden Farben das Objekt beleuchten, wobei gegebenenfalls Lichtquellen gleichen Einfallswinkels das Objekt mit gleicher Farbe beleuchten.

Ein Verfahren zum Beleuchten eines Objektes mit mehreren Lichtquellen mit voneinander abweichenden Einfallswinkeln zu einer optischen Achse einer Optik eines Messgerätes, mit der das Objekt gemessen bzw. abgebildet wird, zeichnet sich dadurch aus, dass eine Zoomoptik mit veränderbarem Arbeitsabstand verwendet wird, wobei Lichtquellen derart zu der optischen Achse angeordnet sind, dass deren Einfallswinkel auf jeweilig eingestellten Arbeitsabstand ausgerichtet sind, oder dass eine Optik mit konstantem Arbeitsabstand verwendet wird, und die Lichtquellen entlang der optischen Achse zum Beleuchten des Objekts in unterschiedliche Einfallswinkel verstellt werden. Auch besteht die Möglichkeit, dass in Abhängigkeit von dem Einfallswinkel der einen zu messenden Bereich des Objekts beleuchtenden Lichtquellen der Arbeitsabstand der Optik eingestellt wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung einer Beleuchtungsanordnung eines optischen Messgerätes,
- Fig. 2: eine Schnittdarstellung einer Halterung der Beleuchtungsanordnung gemäß Fig. 1,
- Fig. 3: eine alternative Ausführungsform zu der Beleuchtungsanordnung nach Fig. 1 und
- Fig. 4: eine Prinzipdarstellung einer weiteren Ausführungsform einer Beleuch- tungsanordnung.

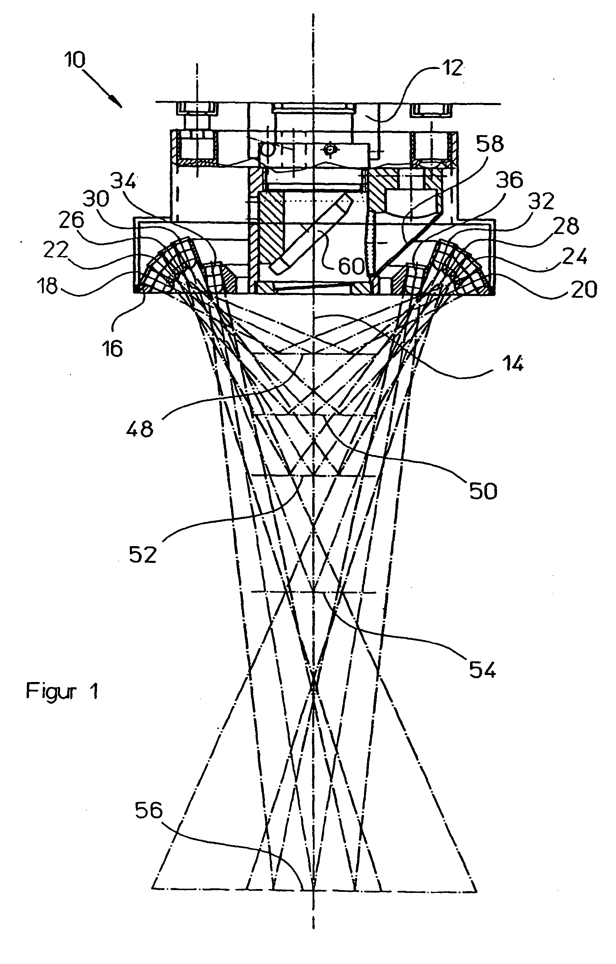

In Fig. 1 ist in Schnittdarstellung und im Ausschnitt ein optisches Messgerät 10 mit einem eine nicht dargestellte Optik aufnehmenden Gehäuse 12 dargestellt, über die von einem zu messenden Objekt reflektierte Strahlung in eine Kamera wie CCD-Kamera abgebildet wird. Dabei kann die Optik als Zoomoptik mit veränderbarem Arbeitsabstand ausgebildet sein, deren Linsengruppen unabhängig voneinander verstellbar sind, wie dies in der WO 99/53268 offenbart ist. Insbesondere kann das optische Messgerät 10 Teil eines Koordinatenmessgerätes sein.

Konzentrisch zur optischen Achse 14 der Optik ist eine Halterung 16 angeordnet, in der auf konzentrisch zueinander verlaufenden Kreisen und radial zueinander versetzt Lichtquellen vorzugsweise in Form von LED's angeordnet sind. In der Schnittdarstellung gemäß Fig. 1 sind die LED's 18, 20 auf einem ersten Kreis, LED's 22, 24 auf einem zweiten Kreis, LED's 26, 28 auf einem dritten Kreis, LED's 30, 32 auf einem vierten Kreis und LED's 34, 36 auf einem fünften Kreis angeordnet.

Die Halterung 16 weist hierzu auf konzentrisch zueinander verlaufenden Kreisen angeordnete Aufnahmen 38, 40, 42, 44, 46 für die LED's 18, 20, 22, 24, 26, 28, 30, 32, 34, 36 auf, wobei diese in den Aufnahmen 38, 40, 42, 44, 46 derart angeordnet sind, dass sich in Bezug auf die optische Achse 14 unterschiedliche Einfallswinkel ergeben. So sind z. B. die Öffnungen 38 auf einem Kreis angeordnet, auf dem die LED's zur optischen Achse 18 einen Einfallswinkel α von ca. 70° beschreiben. Über die auf einem Kreis angeordnete Öffnungen 40 werden LED's unter einem Winkel β mit z. B. 35° zur optischen Achse 14 ausgerichtet. Bezüglich der Öffnungen 42 kann ein Winkel γ von etwa 10° vorgegeben werden. Die Öffnungen 44 liegen wiederum auf einem konzentrisch zu der optischen Achse verlaufenden Kreis, um die LED's unter einem Einfallswinkel δ von z. B. 25° schneiden zu lassen. Hinsichtlich der Öffnungen 46 kann sich z. B. ein Öffnungswinkel κ von 50° ergeben, wobei die angegebenen Werte rein beispielhaft genannt sind.

Durch die zuvor beschriebene Ausbildung der Haltenmg 16 wird erreicht, dass die auf den konzentrisch zueinander verlaufenden Kreisen, die durch die Aufnahmen 38, 40, 42, 44, 46 repräsentiert werden, angeordneten LED's 18, 20, 22, 22, 24, 26, 28, 30, 32, 34, 36 die optische Achse 14 unter unterschiedlichen Einfallswinkeln in zueinander beabstandeten Arbeitsbereichen schneidet, die entlang der optischen Achse 14 ausgeleuchtet werden und die in Fig. 1 mit den Bezugszeichen 48, 50, 52, 54 und 56 bezeichnet sind.

Befindet sich z. B. eine zu messende Oberfläche oder eine Kante eines Objektes in dem Arbeitsbereich bzw. in der Arbeitsebene 52, so werden die Leuchtdioden 26, 28 genutzt, die die Arbeitsebene 52 optimal ausleuchten. Bei Veränderung des Arbeitsabstandes - z. B. beim Verlegen des Arbeitsabstandes in die Ebene 54 - wirken nunmehr die Leuchtdioden 30, 32 optimal. Somit kann über einen großen Arbeitsabstandsbereich optimal gemessen werden, ohne dass es eines mechanischen Verstellens der LED's 18, 20, 22, 24, 26, 28, 30, 32, 34, 36 oder der Halterung 16 zu dem die Optik aufnehmenden Gehäuse 12 bedarf.

Die Lichtquellen sind dabei stets derart zueinander ausgerichtet, dass deren Strahlen sich in einer vorgegebenen Arbeitsebene treffen bzw. eine entsprechende Arbeitsebene ausleuchten. Dies wiederum bedeutet, dass ein zu messender Bereich stets auf die entsprechende Arbeitsebene auszurichten ist.

Dadurch, dass in der erfindungsgemäßen Beleuchtungsanordnung auf die optische Achse 14 konzentrisch umgebenden Ringen die LED's 18, 20, 22, 24, 26, 28, 30, 32, 34 unter definierten Winkeln auf unterschiedliche Abschnitte der optischen Achse 14 ausgerichtet sind, sind diese jeweils auf einen anderen Punkt auf der optischen Achse 14 der Optik fokussiert, also im Ausführungsbeispiel der Fig. 1 auf die Schnittpunkte zwischen der optischen Achse 14 und den Arbeitsbereichen oder Arbeitsebenen 48, 50, 52, 54 und 56. Bei Fokussierung des Abbildungssystems, also der Optik auf den jeweiligen Schnittpunkt, entsteht ein unterschiedlicher Einstrahlwinkel zwischen Beleuchtungsstrahl und zu messender Oberfläche des Objektes, so dass eine optimale Beleuchtung und somit eine hohe Güte der Messung gegeben ist.

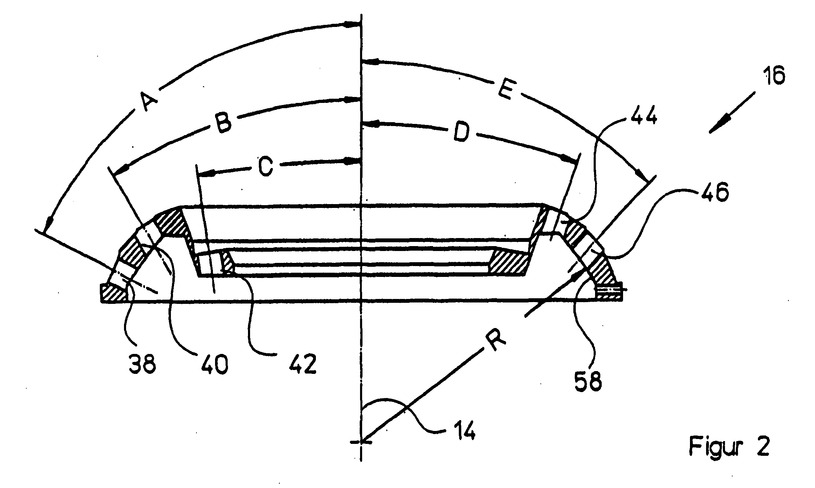

Wie insbesondere durch die Fig. 2 verdeutlicht wird, ist die Höhe der Halterung 16 ungeachtet der Möglichkeit, dass über die Leuchtdioden 18, 20, 22, 24, 26, 28, 30, 32, 34, 36 Einfallswinkel zu der Achse 14 im Bereich zwischen 5° und 85° oder mehr erzielbar sind und somit ein entsprechend langer Arbeitsbereich zur Verfügung gestellt wird, innerhalb dessen gemessen werden kann, relativ gering, so dass die Gefahr von Kollisionen mit einem zu messenden Objekt ausgeschlossen ist.

Hierzu ist insbesondere vorgesehen, dass die objektseitige Fläche 58 der Halterung 16 einen Krümmungsradius R insbesondere im Bereich zwischen 30 - 90 mm, vorzugsweise 50 - 70 mm aufweist. Durch den Krümmungsradius R bedingt ist der Durchmesser der Halterung 16 selbst relativ gering, wobei der Innendurchmesser maximal dem 4- bis 5-fachen des minimalen Arbeitsabstandes zwischen freier Unterseite der Halterung 16 und eines zu messenden Objektes beträgt. Somit ist der Abstand zwischen den Leuchtdioden 18, 20, 22, 24, 26, 28, 30, 32, 34, 36 und dem zu messenden Objekt relativ gering, so dass wiederum eine hohe Ausleuchtung gegeben ist.

Beim Messen kann ein Objekt in der Arbeitsebene bewegt werden, in der ein optimales Ausleuchten erfolgt. In Abhängigkeit von den insoweit genutzten Lichtquellen kann sodann der Arbeitsabstand der Messoptik automatisch eingestellt werden. Umgekehrt besteht ohne Weiteres die Möglichkeit, dass die Optik auf einen bestimmten Arbeitsabstand eingestellt wird, wobei in Abhängigkeit von diesem die Lichtquellen eingeschaltet werden, die auf diesen Arbeitsabstand ausgerichtet sind.

Des Weiteren ergibt sich aus der Prinzipdarstellung der Fig. 1, dass entlang der optischen Achse 14 eine Hellfeld-Auflichtstrahlung über optische Umlenkelemente 58, 60 eingespiegelt werden kann.

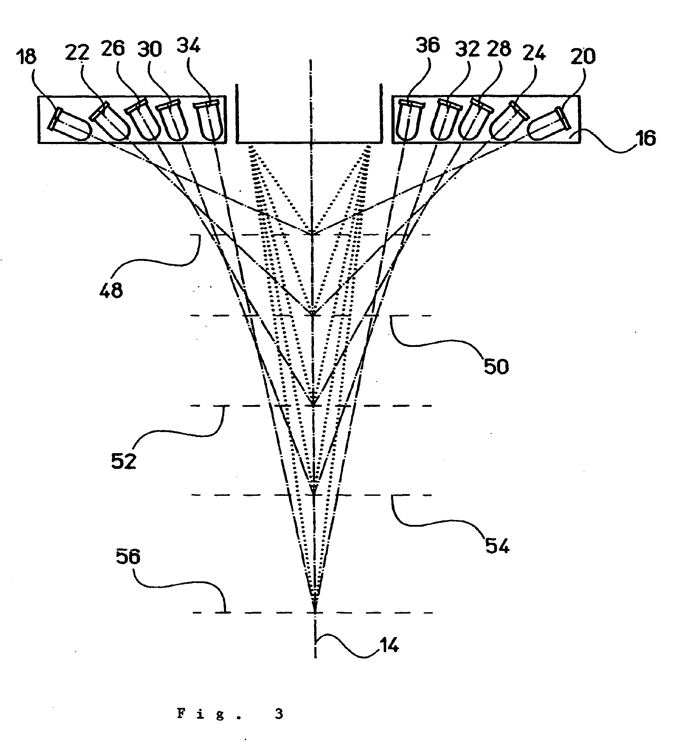

Die Ausführungsform in Fig. 3 unterscheidet sich von der der Fig. 1 dahingehend, als dass die Halterung keine hauben- bzw. kalottenförmige Geometrie in Bezug auf die Anordnung der Lichtquellen 18, 20, 22, 24, 26, 28, 30, 32, 34, 36 aufweist, sondern eine Stab- oder Scheibengeometrie, in der die Lichtquellen 18, 20, 22, 24, 26, 28, 30, 32, 34, 36 in einer Ebene angeordnet sind, die die optische Achse 14 vorzugsweise senkrecht schneidet

Ist die Halterung 16 vorzugsweise dem Grunde nach eine Lochscheibe, die konzentrisch die Optik umgibt, so können alternativ die Leuchtdioden 18, 22, 26, 30, 34 einerseits und 20, 24, 28, 32, 36 andererseits in quader- bzw. balkenförmigen Aufnahmen angeordnet sein, die parallel zueinander verlaufen.

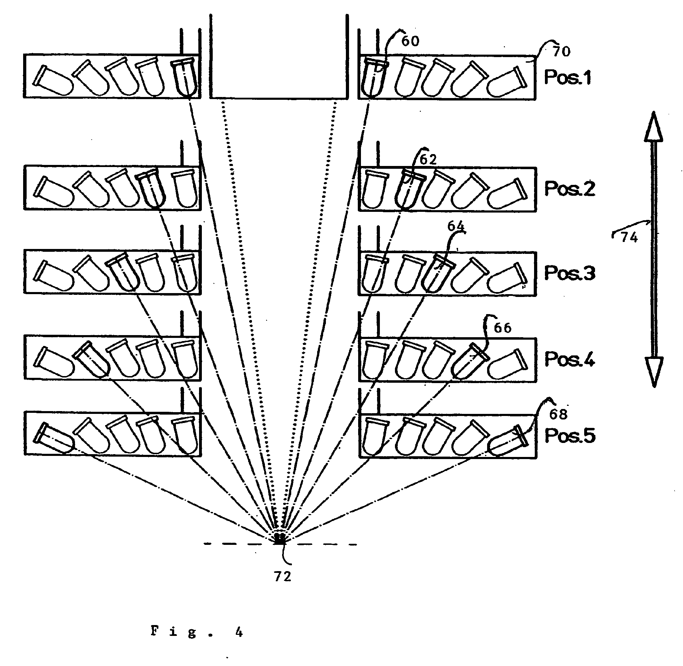

Ist bei dem Ausführungsbeispiel der Fig. 1 und 2 eine Halterung vorgesehen, die kugel- bzw. kalottenförmige Geometrie in Bezug auf die Aufnahmen bzw. Anordnungen der Lichtquellen aufweist, so besteht entsprechend der Fig. 4 - wie gemäß Fig. 3 - auch die Möglichkeit, Lichtquellen 60, 62, 64, 66, 68 in einer Ebene anzuordnen, wobei die Lichtquellen 60, 62, 64, 66, 68 unter unterschiedlichen Einfallswinkeln die optische Achse in zueinander beabstandeten Bereiche schneiden. Die Lichtquellen 60, 62, 64, 66, 68 können in quader- bzw. balkenförmigen Aufnahmen als Halterung 70 angeordnet sein, die ihrerseits eine Ebene aufspannen, die insbesondere senkrecht zur optischen Achse verläuft. Auch kann eine Ringanordnung gewählt werden, wobei die jeweilige Halterung eine Scheibe bilden kann. Dabei sind die Lichtquellen 60, 63, 64, 66, 68 wiederum in einer gemeinsamen Ebene angeordnet, die parallel zu der von der Haltenmg 70 aufgespannten Ebene verläuft. Um ein Objekt 72 unter unterschiedlichen Einfallswinkeln zu beleuchten, ist es sodann nur erforderlich, dass die Halterung 70 entlang der optischen Achse, also entsprechend dem Doppelpfeil 74 verstellt wird. In Abhängigkeit von der Stellung der Halterung 70 können Lichtquellen 60, 62, 64, 66, 68 unterschiedlicher Einfallswinkel aktiviert werden, wodurch das Objekt 72 unter unterschiedlichen Winkeln beleuchtet wird. Dies wird rein prinzipiell anhand der Fig. 4 verdeutlicht.

Ungeachtet dessen gehorcht die Anordnung der Fig. 4 der erfindungsgemäßen Lehre insoweit, als dass die Achsen der Lichtquellen 60, 62, 64, 66, 68 bei ortsfest angeordneter Halterung 70 die optische Achse in zueinander beabstandeten Bereichen schneiden.

## Patentansprüche

1. Messgerät, umfassend eine Beleuchtungsanordnung zum Beleuchten eines zu messenden Objektes mit mehreren von einer Halterung (16, 70) ausgehenden Lichtquellen (18, 20, 22, 24, 26, 28, 30, 32, 34, 36, 60, 62, 64, 66, 68) sowie eine Optik, über die das Objekt messbar bzw. abbildbar ist, wobei die Lichtquellen in der Halterung (16, 70) derart angeordnet sind, dass deren Einfallswinkel (α, β, γ, δ, κ) die optische Achse der Optik in voneinander abweichenden Bereichen (48, 50, 52, 54, 56) schneiden,
**dadurch gekennzeichnet,**
**dass** die Optik (48, 50, 52, 54, 56) des als Koordinatenmessgerät ausgebildeten Messgerätes eine Zoomoptik mit veränderbarem Arbeitsabstand ist, dass die Einfallswinkel (α, β, γ, δ, κ) der Lichtquellen (18, 20, 22, 24, 26 28, 30, 32, 34, 36, 60, 62, 64, 66, 68) derart angeordnet sind, dass die Einfallswinkel der Lichtquellen die optische Achse (14) im jeweiligen eingestellten Arbeitsabstandsbereich der Optik schneiden, oder dass die Optik einen konstanten Arbeitsabstand aufweist und das Objekt (72) durch Relativverstellung der Halterung (70) entlang der optischen Achse (14) zu der Optik unter unterschiedlichen Lichteinfallswinkeln beleuchtbar ist.

2. Messgerät nach Anspruch 1,
**dadurch gekennzeichnet,**
**dass** die Lichtquellen (18, 20, 22, 24, 26, 28, 30, 32, 34, 36) auf die optische Achse (14) konzentrisch umgebenden Kreisen angeordnet sind, wobei auf Kreisen unterschiedlicher Durchmesser angeordnete Lichtquellen (18, 20, 22, 24, 26, 28, 30, 32, 34, 36) die optische Achse (14) in voneinander abweichenden Bereichen (48, 50, 52, 54, 56) schneiden.

3. Messgerät nach Anspruch 1,
**dadurch gekennzeichnet,**
**dass** die Lichtquellen (18, 20, 22, 24, 26, 28, 30, 32, 34, 36), insbesondere LED's, auf aufeinanderfolgenden Kreisen radial versetzt zueinander angeordnet sind.

4. Messgerät nach Anspruch 1,
**dadurch gekennzeichnet,**
**dass** die Halterung (16) die optische Achse (14) konzentrisch und in Bezug auf das zu messende Objekt kollisionsfrei umgibt.

5. Messgerät nach Anspruch 1,
**dadurch gekennzeichnet,**
**dass** die Halterung (16) für die Lichtquellen (18, 20, 22, 24, 26, 28, 30, 32, 34, 36) eine hauben- oder kalottenförmige Geometrie mit Aussparungen wie Bohrungen (38, 40, 42, 44,46) aufweist, in denen die Lichtquellen angeordnet sind.

6. Messgerät nach Anspruch 1,
**dadurch gekennzeichnet,**
**dass** die Halterung (70) die Lichtquellen (60, 62, 64, 66, 68) in einer Ebene aufnimmt, die die optische Achse vorzugsweise senkrecht schneidet.

7. Messgerät nach Anspruch 1,
**dadurch gekennzeichnet,**
**dass** die Halterung (70) eine Scheibengeometrie wie Lochscheibengeometrie aufweist.

8. Messgerät nach Anspruch 7,
**dadurch gekennzeichnet,**
**dass** die Halterung eine quader- bzw. blockförmige Geometrie aufweist.

9. Messgerät nach Anspruch 8,
**dadurch gekennzeichnet,**
**dass** die Halterung aus diametral zur optischen Achse (14) verlaufenden quader- bzw. blockförmigen Abschnitten besteht.

10. Messgerät nach zumindest Anspruch 1,
**dadurch gekennzeichnet,**
**dass** die Halterung (70) höhenverstellbar ausgebildet ist.

11. Messgerät nach zumindest Anspruch 1,
**dadurch gekennzeichnet,**
**dass** die Halterung (70) manuell oder automatisch parallel zur optischen Achse verstellbar ist.

12. Messgerät nach Anspruch 5,
**dadurch gekennzeichnet,**
**dass** die Halterung (16) objektseitig einen Krümmungsradius R mit 40 mm ≤ R ≤ 80 mm, insbesondere R in etwa 60 mm aufweist.

13. Messgerät nach zumindest Anspruch 1,
**dadurch gekennzeichnet,**
**dass** bei konstantem Arbeitsabstand der Optik das Objekt (72) durch Verstellen der Halterung (70) entlang der optischen Achse (14) unter unterschiedlichen Lichteinfallswinkeln beleuchtbar ist.

14. Messgerät nach Anspruch 1,
**dadurch gekennzeichnet,**
**dass** die Lichtquellen (18, 20, 22, 24, 26, 28, 30, 32, 34, 36) verstellbar in den Aufnahmen (38, 40, 42, 44, 46) der Halterung (16) angeordnet sind.

15. Messgerät nach Anspruch 1,
**dadurch gekennzeichnet,**
**dass** die Lichtquellen (18, 20, 22, 24, 26, 28, 30, 32, 34, 36) unverstellbar in der Halterung (16) angeordnet sind.

16. Messgerät nach Anspruch 1,
**dadurch gekennzeichnet,**
**dass** die Lichtquellen (18, 20, 22, 24, 26, 28, 30, 32, 34, 36) ausgerichtete Faserbündel und/oder Faserringsegmente sind.

17. Messgerät nach Anspruch 1,
**dadurch gekenntzeichnet,**
**dass** die Lichtquellen (18, 20, 22, 24, 26, 28, 30, 32, 34, 36) von von Spiegeln reflektierte Strahlungen sind.

18. Messgerät nach Anspruch 1,
**dadurch gekennzeichnet,**
**dass** entlang der optischen Achse (14) eine Hellfeld-Auflichtstrahlung einspiegelbar ist.

19. Messgerät nach Anspruch 1,
**dadurch gekennzeichnet,**
**dass** die Lichtquellen (18, 20, 22, 24, 26, 28, 30, 32, 34, 36) mit voneinander abweichenden Farben das Objekt beleuchten.

20. Messgerät nach Anspruch 1,
**dadurch gekennzeichnet,**
**dass** Lichtquellen (18, 20, 22, 24, 26, 28, 30, 32, 34, 36) gleichen Einfallswinkels (α, β, γ, δ, κ) das Objekt mit gleicher Farbe beleuchten.

21. Verfahren zum Beleuchten eines Objekts mit mehreren Lichtquellen mit voneinander abweichenden Einfallswinkeln (α, β, γ, δ, κ) zu einer optischen Achse (14) einer Optik eines Messgerätes, mit der das Objekt gemessen bzw. abgebildet wird,
**dadurch gekennzeichnet,**
**dass** eine Zoomoptik mit veränderbarem Arbeitsabstand verwendet wird, wobei die Lichtquellen (18, 20, 22, 24, 26, 28, 30, 32, 34, 36) derart zu der optischen Achse (14) angeordnet sind, dass deren Einfallswinkel (α, β, γ, δ, κ) auf jeweilig eingestellten Arbeitsabstand ausgerichtet sind, oder dass eine Optik mit konstantem Arbeitsabstand verwendet wird und die Lichtquellen entlang der optischen Achse zum Beleuchten des Objekts in unterschiedliche Einfallswinkel versteltt werden.

22. Verfahren nach Anspruch 21,
**dadurch gekennzeichnet,**
**dass** in Abhängigkeit von dem Einfallswinkel der das Objekt beleuchtenden Lichtquellen der Arbeitsabstand der Optik eingestellt wird.

## Claims

1. A measuring device, comprising an illumination arrangement for illuminating an object to be measured with several light sources (18, 20, 22, 24, 26, 28, 30, 32, 34, 36, 60, 62, 64, 66, 68) going out from a support (16, 70) as well as an optic by means of which the object can be measured or imaged, where the light sources are arranged such in the support (16, 70), that their incidence angles (α, β, γ, δ, κ) intersect the optical axis of the optic in divergent areas (48, 50, 52, 54, 56),
**characterized in**
**that** the optic (48, 50, 52, 54, 56) of the measuring device designed as coordinate measuring device is a zoom optic with variable working distance, that the incidence angles (α, β, γ, δ, κ) of the light sources (18, 20, 22, 24, 26, 28, 30, 32, 34, 36, 60, 62, 64, 66, 68) are arranged such that the incidence angles of the light sources intersect the optical axis (14) in the respective adjusted working distance region of the optic, or that the optic has a constant working distance and the object (72) is illuminable by moving the support (70) along the optical axis (14) relatively to the optic under different angles of incident light.

2. Measuring device according to claim 1,
**characterized in**
**that** the light sources (18, 20, 22, 24, 26, 28, 30, 32, 34, 36) are arranged on circles enclosing the optical axis (14) concentrically, while the light sources (18, 20, 22, 24, 26, 28, 30, 32, 34, 36) arranged on circles of different diameters intersect the optical axis (14) in divergent areas (48, 50, 52, 54, 56).

3. Measuring device according to claim 1,
**characterized in**
**that** the light sources (18, 20, 22, 24, 26, 28, 30, 32, 34, 36), especially LEDs, are arranged radially offset with respect to each other on consecutive circles.

4. Measuring device according to claim 1,
**characterized in**
**that** the support (16) encloses the optical axis (14) concentrically and in a collision-free way with respect to the object to be measured.

5. Measuring device according to claim 1,
**characterized in**
**that** the support (16) for the light sources (18, 20, 22, 24, 26, 28, 30, 32, 34, 36) has a hood or calotte-shaped geometry with recesses such as bores (38, 40, 42, 44, 46), in which the light sources are arranged.

6. Measuring device according to claim 1,
**characterized in**
**that** the support (70) receives the light sources (60, 62, 64, 66, 68) within a plane that intersects the optical axis preferably vertically.

7. Measuring device according to claim 1,
**characterized in**
**that** the support (72) has a disk-shaped geometry such as a dial-shaped geometry.

8. Measuring device according to claim 7,
**characterized in**
**that** the support has a cubic-shaped or block-shaped geometry.

9. Measuring device according to claim 8,
**characterized in**
**that** the support consists of cubic-shaped or block-shaped sections running diametrically to the optical axis (14).

10. Measuring device according to at least claim 1,
**characterized in**
**that** the support (70) is configured so as to be height adjustable.

11. Measuring device according to at least claim 1,
**characterized in**
**that** the support (70) can be displaced manually or automatically parallel to the optical axis.

12. Measuring device according to claim 5,
**characterized in**
**that** on the object side the support (16) has a curvature radius R of 40 mm ≤ R ≤ 80 mm, in particular R of about 60 mm.

13. Measuring device according to at least claim 1,
**characterized in**
**that** if the working distance of the optic is constant, the object (72) can be illuminated at different light incidence angles by displacing the support (70) along the optical axis (14).

14. Measuring device according to claim 1,
**characterized in**
**that** the light sources (18, 20, 22, 24, 26, 28, 30, 32, 34, 36) are arranged within the holders (38, 40, 42, 44, 46) of the support (16) so as to be displaceable.

15. Measuring device according to claim 1,
**characterized in**
**that** the light sources (18, 20, 22, 24, 26, 28, 30, 32, 34, 36) are arranged fixed within the support (16).

16. Measuring device according to claim 1,
**characterized in**
**that** the light sources (18, 20, 22, 24, 26, 28, 30, 32, 34, 36) are aligned fiber bundles and/or fiber ring segments.

17. Measuring device according to claim 1,
**characterized in**
**that** the light sources (18, 20, 22, 24, 26, 28, 30, 32, 34, 36) are radiations reflected by mirrors.

18. Measuring device according to claim 1,
**characterized in**
**that** a bright field incident radiation can be mirrored in along the optical axis (14).

19. Measuring device according to claim 1,
**characterized in**
**that** the light sources (18, 20, 22, 24, 26, 28, 30, 32, 34, 36) illuminate the object with divergent colors.

20. Measuring device according to claim 1,
**characterized in**
**that** light sources (18, 20, 22, 24, 26, 28, 30, 32, 34, 36) with the same incidence angles (α, β, γ, δ, κ) illuminate the object with the same color.

21. A process for illuminating an object with several light sources with different incidence angles (α, β, γ, δ, κ) relative to an optical axis (14) of an optic of a measuring device, with which the object is measured or imaged,
**characterized in**
**that** a zoom optic with variable working distance is used, where the light sources (18, 20, 22, 24, 26, 28, 30, 32, 34, 36) are arranged relative to the optical axis (14) such that their incidence angles (α, β, γ, δ, κ) are oriented to respectively adjusted working distance, or that an optic with constant working distance is used and the light sources are displaced along the optical axis in different incidence angles for illuminating the object.

22. Process according to claim 21,
**characterized in**
**that** the working distance of the optic is adjusted in dependence of the incidence angle of the light sources that illuminate the object.

## Revendications

1. Appareil de mesure, comprenant un système d'éclairage destiné à éclairer un objet à mesurer, avec plusieurs sources lumineuses (18, 20, 22, 24, 26, 28, 30, 32, 34, 36, 60, 62, 64, 66, 68) issues d'un support (16, 70), ainsi qu'un instrument optique au travers duquel l'objet peut être mesuré ou représenté, sachant que les sources lumineuses sont disposées dans le support (16, 70) de manière telle que leur angle d'incidence (α, β, γ, δ, κ) coupe l'axe optique de l'instrument optique dans des zones (48, 50, 52, 54, 56) s'écartant les unes des autres,
**caractérisé en ce**
**que** l'instrument optique (48, 50, 52, 54, 56) de l'appareil de mesure formé comme mesureur à coordonnées est un instrument optique à zoom avec distance de travail modifiable, que les angles d'incidence (α, β, γ, δ, κ) des sources lumineuses (18, 20, 22, 24, 26, 28, 30, 32, 34, 36, 60, 62, 64, 66, 68) sont disposés de manière telle que les angles d'incidence des sources lumineuses coupent l'axe optique (14) dans la plage de distance de travail respectivement réglée de l'instrument optique, ou que l'instrument optique présente une distance de travail constante et que l'objet (72) peut être éclairé sous différents angles d'incidence de la lumière par déplacement relatif du support (70) par rapport à l'instrument optique le long de l'axe optique (14).

2. Appareil de mesure selon la revendication 1,
**caractérisé en ce**
**que** les sources lumineuses (18, 20, 22, 24, 26, 28, 30, 32, 34, 36) sont disposées sur des cercles entourant l'axe optique (14) de manière concentrique, sachant que des sources lumineuses (18, 20, 22, 24, 26, 28, 30, 32, 34, 36) disposées sur des cercles de différents diamètres coupent l'axe optique (14) dans des zones (48, 50, 52, 54, 56) s'écartant les unes des autres.

3. Appareil de mesure selon la revendication 1,
**caractérisé en ce**
**que** les sources lumineuses (18, 20, 22, 24, 26, 28, 30, 32, 34, 36), en particulier des DEL, sont disposées de manière radialement décalée les unes par rapport aux autres sur des cercles successifs.

4. Appareil de mesure selon la revendication 1,
**caractérisé en ce**
**que** le support (16) entoure l'axe optique (14) de manière concentrique et sans collision en ce qui concerne l'objet à mesurer.

5. Appareil de mesure selon la revendication 1,
**caractérisé en ce**
**que** le support (16) pour les sources lumineuses (18, 20, 22, 24, 26, 28, 30, 32, 34, 36) présente une géométrie en forme de coupole ou de calotte avec des évidements tels que perçages (38, 40, 42, 44, 46) dans lesquels sont disposées les sources lumineuses.

6. Appareil de mesure selon la revendication 1,
**caractérisé en ce**
**que** le support (70) loge les sources lumineuses (60, 62, 64, 66, 68) dans un plan qui coupe l'axe optique de préférence perpendiculairement.

7. Appareil de mesure selon la revendication 1,
**caractérisé en ce**
**que** le support (70) présente une géométrie en forme de disque telle qu'une géométrie de disque ajouré.

8. Appareil de mesure selon la revendication 7,
**caractérisé en ce**
**que** le support présente une géométrie en forme de parallélépipède ou de bloc.

9. Appareil de mesure selon la revendication 8,
**caractérisé en ce**
**que** le support est constitué de sections en forme de parallélépipède ou de bloc s'étendant diamétralement par rapport à l'axe optique (14).

10. Appareil de mesure selon au moins la revendication 1,
**caractérisé en ce**
**que** le support (70) est réglable en hauteur.

11. Appareil de mesure selon au moins la revendication 1,
**caractérisé en ce**
**que** le support (70) est manuellement ou automatiquement réglable parallèlement à l'axe optique.

12. Appareil de mesure selon la revendication 5,
**caractérisé en ce**
**que** le support (16) présente du côté de l'objet un rayon de courbure R tel que 40 mm ≤ R ≤ 80 mm, en particulier R égale approximativement 60 mm.

13. Appareil de mesure selon au moins la revendication 1,
**caractérisé en ce**
**qu'**en présence d'une distance de travail constante de l'instrument optique, l'objet (72) peut être éclairé sous différents angles d'incidence de la lumière par déplacement du support (70) le long de l'axe optique (14).

14. Appareil de mesure selon la revendication 1,
**caractérisé en ce**
**que** les sources lumineuses (18, 20, 22, 24, 26, 28, 30, 32, 34, 36) sont disposées de manière réglable dans les logements (38, 40, 42, 44, 46) du support (16).

15. Appareil de mesure selon la revendication 1,
**caractérisé en ce**
**que** les sources lumineuses (18, 20, 22, 24, 26, 28, 30, 32, 34, 36) sont disposées de manière indéréglable dans le support (16).

16. Appareil de mesure selon la revendication 1,
**caractérisé en ce**
**que** les sources lumineuses (18, 20, 22, 24, 26, 28, 30, 32, 34, 36) sont des faisceaux de fibres et/ou des segments annulaires de fibres alignés.

17. Appareil de mesure selon la revendication 1,
**caractérisé en ce**
**que** les sources lumineuses (18, 20, 22, 24, 26, 28, 30, 32, 34, 36) sont des rayonnements réfléchis par des miroirs.

18. Appareil de mesure selon la revendication 1,
**caractérisé en ce**
**qu'**un éclairage à fond clair peut être réfléchi le long de l'axe optique (14).

19. Appareil de mesure selon la revendication 1,
**caractérisé en ce**
**que** les sources lumineuses (18, 20, 22, 24, 26, 28, 30, 32, 34, 36) éclairent l'objet avec des couleurs s'écartant les unes des autres.

20. Appareil de mesure selon la revendication 1,
**caractérisé en ce**
**que** les sources lumineuses (18, 20, 22, 24, 26, 28, 30, 32, 34, 36) ayant le même angle d'incidence (α, β, γ, δ, κ) éclairent l'objet avec la même couleur.

21. Procédé destiné à éclairer un objet avec plusieurs sources lumineuses ayant des angles d'incidence (α, β, γ, δ, κ) s'écartant les uns des autres par rapport à un axe optique (14) d'un instrument optique avec lequel l'objet est mesuré ou représenté,
**caractérisé en ce**
**qu'**est mis en oeuvre un instrument optique à zoom avec distance de travail variable, sachant que les sources lumineuses (18, 20, 22, 24, 26, 28, 30, 32, 34, 36) sont disposées par rapport à l'axe optique (14) de manière telle que leurs angles d'incidence (α β, γ, δ, κ) sont ajustés sur la distance de travail respectivement réglée, ou qu'est mis en oeuvre un instrument optique avec distance de travail constante et que les sources lumineuses sont déplacées le long de l'axe optique pour éclairer l'objet sous différents angles d'incidence.

22. Procédé selon la revendication 21,
**caractérisé en ce**
**que** la distance de travail de l'instrument optique est réglée en fonction de l'angle d'incidence des sources lumineuses éclairant l'objet.
